Europäisches Patentamt

European Patent Office

Office européen des brevets

(11) Veröffentlichungsnummer: **0 568 716 A1**

(12) **EUROPÄISCHE PATENTANMELDUNG**

(21) Anmeldenummer: **92107675.8**

(22) Anmeldetag: **07.05.92**

(51) Int. Cl.⁵: **H04R 5/02**, H04R 1/32

(43) Veröffentlichungstag der Anmeldung:
**10.11.93 Patentblatt 93/45**

(84) Benannte Vertragsstaaten:
**CH ES FR GB IT LI NL**

(71) Anmelder: **Lang, Dieter**
**Prof.-Simmel-Strasse 5**
**D-07548 Gera(DE)**

(72) Erfinder: **Lang, Dieter**
**Prof.-Simmel-Strasse 5**
**D-07548 Gera(DE)**

(74) Vertreter: **Weidelt, Manfred**
**Patentanwalt,Dipl.-Ing. (FH),Pat.-Ing.**
**Ruckdeschelstrasse 17**
**D-07551 Gera (DE)**

(54) **Lautsprecheranordnung.**

(57) Die Erfindung betrifft eine Lautsprecheranordnung zur Wiedergabe, insbesondere wenigstens zweikanalig übertragbarer Schallereignisse, vorzugsweise in Wohnräumen mittels Lautsprecherkombinationen, wobei der Hörer räumlich zwanglos einen optimalen Stereo- und Raumklang bei minimalem Material- und Arbeitsaufwand erfährt. Erfindungsgemäß wurde das dadurch gelöst, daß je eine Stereolautsprecherbox (31), bestehend aus mehreren Hochtönern (38, 39) und Mitteltönern sowie Tieftönern rechts und links gegenüber der Hörstelle/Hörbereich (6.1 - 6.8/A 1 - A 8) angeordnet ist. Die Hochtöner (38, 39) und Mitteltöner sind seitlich über eine bekannte Bedienungseinheit und bekannte Sensoren (40) steuerbar drehbar. In der Stereolautsprecherboxenfront sind Sensoren (40), die mit der örtlich variablen im Wohnraum befindlichen Hörstelle (6) gekoppelt sind und mit der Bedienungseinheit korrespondieren, angeordnet.

FIG. 10

Die Erfindung betrifft eine Lautsprecheranordnung zur Wiedergabe, insbesondere wenigstens zweikanalig übertragbarer Schallereignisse, vorzugsweise in Wohnräumen mittels Lautsprecherkombinationen, wobei die Lautsprecher in verschiedener Richtung angeordnet sind.

Es ist bekannt, daß in normalen Wohnräumen, insbesondere mit unterschiedlichen Größenabmessungen, die Schallwiedergabe von Lautsprechern verbesserungswürdig ist. Die Schallwiedergabe stellt den schwächsten Teil der Unterhaltungselektronik dar. Um dies zu verbessern, wurden in den BRD-Offenlegungsschriften 2 207 006, 2 556 343, 3 708 422, 2 910 117, 3 132 250, 2 439 934 und in der BRD-Auslegeschrift 1 303 535 Lautsprechersysteme und Lautsprecherboxen dargelegt, die den Effekt zu verbessern zum Inhalt haben, ohne jedoch optimale Effekte zu erreichen. So wird zwischen reflektiertem Schall und direktem Schall deshalb ein Verhältnis von 8 : 1 angestrebt (BOSE-Lautsprecher). Die präzise Regulierung reflektiertem zu direktem Schall ist jedoch schwierig, auch die Raumgeometrie und die Aufstellorte für Lautsprecher sind von Ort zu Ort anders. Deshalb haben sich überwiegend Lautsprecheranlagen mit Abgabe von hauptsächlich direktem Schall durchgesetzt. Sind zwei Lautsprecheranlagen jedoch parallel zueinander angeordnet, so wird häufig die Schallenergie von Wänden um 180° reflektiert. Das bewirkt unangenehmes Hörempfinden.

Eine variable Abstrahlrichtung von Lautsprecheranlagen, besonders der Hochtöner, beeinflußt das stereofone und räumliche Hören wesentlich. Da die gebräuchlichen Lautsprecheranlagen dazu nicht geeignet sind, wird notgedrungen in der Regel darauf verzichtet. Lautsprecher mit seitlicher Abstrahlrichtung führen meistens zu unangenehmen Hörempfindungen. Bekannterweise hat sich zum stereofonen Hören die Anwendung von zwei Lautsprecheranlagen durchgesetzt.

Gemäß OS-DE 3 607 987 ist ein Fernsehempfangsgerät bekannt, das mindestens einen seitlich oberhalb oder unterhalb der Bildröhre in einem Gehäuse befestigten Lautsprecher besitzt und daß dieser Lautsprecher im Gehäuse schwenkbar gelagert ist. Weitere Ausführungsformen sind, daß dieser Lautsprecher um eine vertikale Achse oder um eine horizontale Achse drehbar und von einem Fernbedienungsgeber erzeugten Steuersignal steuerbar ist. Diese Lösung beinhaltet zwar eine Verbesserung der Raumklangqualität, jedoch kann die Anordnung für Direktschall und reflektiertem Schall gleichzeitig nicht ausgerichtet werden.

Die Erfindung bezweckt, unter Vermeidung dieser Nachteile, insbesondere das stereofone und räumliche Hören, vor allem der Hochtöner, zu verbessern und die natürliche Reproduktion von stereofonen Aufzeichnungen in normalen Räumen wie mittelmäßig gedämpften Wohnzimmern zu ermöglichen. Der Hörer soll in die Lage versetzt werden, sich gezielt und schnell ohne wesentlichen Raumzwang das optimale Klangbild zu verschaffen.

Die Erfindung stellt sich die Aufgabe, eine Lautsprecheranordnung zu schaffen, wobei eine veränderbare Aufbauanordnung der Lautsprecherboxen eingeschlossen ist und der Hörer räumlich zwangslos einen optimalen Stereo- und Raumklang bei minimalem Material- und Arbeitsaufwand erfährt. Weiterhin soll eine Anordnung geschaffen werden, in der mittels bekannter Bedienungs- und Empfangselemente die Drehbarkeit der Lautsprecher in der Lautsprecheranordnung im Hinblick auf eine örtlich veränderbare Lage des Hörers, insbesondere in Wohnräumen, enthalten ist.

Die Aufgabe wird erfindungsgemäß nach der im Anspruch 1 wiedergegebenen technischen Lehre gelöst. Vorteilhafte Weiterbildungen der Erfindung sind in den Unteransprüchen beschrieben.

Die Erfindung wird anhand eines Ausführungsbeispieles näher erläutert.

In den Zeichnungen zeigen:

Fig. 1      eine schematische Draufsicht auf einen Schnitt eines Fernsehgerätes mit Stereowiedergabeteil

Fig. 2      eine schematische Draufsicht auf eine Stereolautsprecherbox

Fig. 3 - 7      weitere Anordnungen von Lautsprechern in Stereolautsprecherboxen mit entsprechenden Schnitten I, II und III

Fig. 8 + 9      Prinzipanordnungen der Schallabstrahlrichtungen des direkten und reflektierten Schalles

Fig. 10      schematische Draufsicht auf einen Schnitt einer Stereolautsprecherbox

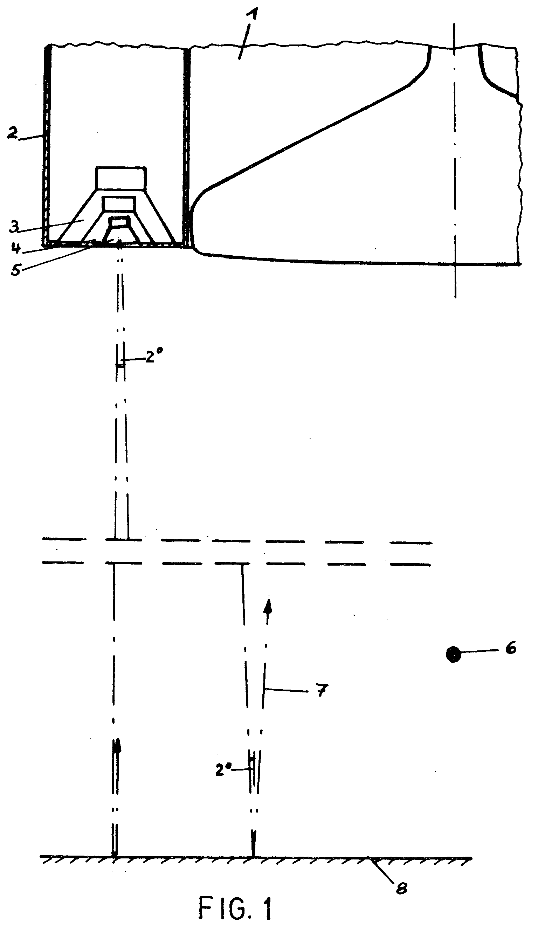

Figur 1 zeigt ein Fernsehgerät mit Stereoteilen 1 und Gehäuse 2. Die linke Lautsprecheranlage zeigt Lautsprecher für Tiefton 3, für Mittelton 4 und für Hochton 5. Die Lautsprecher sind stationär mit dem Fernsehgerät verbunden. Tief- und Mitteltöner 3 und 4 werden starr nach vorn weisend eingebaut. Der Hochtöner 5 ist so drehbar nach vorn weisend gelagert, daß der Winkel etwa 2° zur idealen Hörstelle 6 beträgt. Beim Hochtöner 5 befindet sich die Schallabstrahlrichtung des Direktschalles und des einmal reflektierten Schalles 7 links und nahe zur idealen Hörstelle 6. Eine analoge Anwendung ist bei Stereoradios möglich. Bei den Hochtönern 5 wird durch die Raumwand 8 bei gleicher Leistungsabgabe weniger Schallenergie zur Lautsprecheranordnung reflektiert, die Beeinflussungen Direktschall zum reflektierten Schall 7 sind verringert. Die Raumwand 8 reflektiert den Schall 7, der als Schallabstrahlrichtung dargestellt ist, verstärkt in Richtung idealer Hörstelle 6. Es tritt eine Verbesserung des Hörempfindens und eine Verbesserung des Stereoeffektes ein.

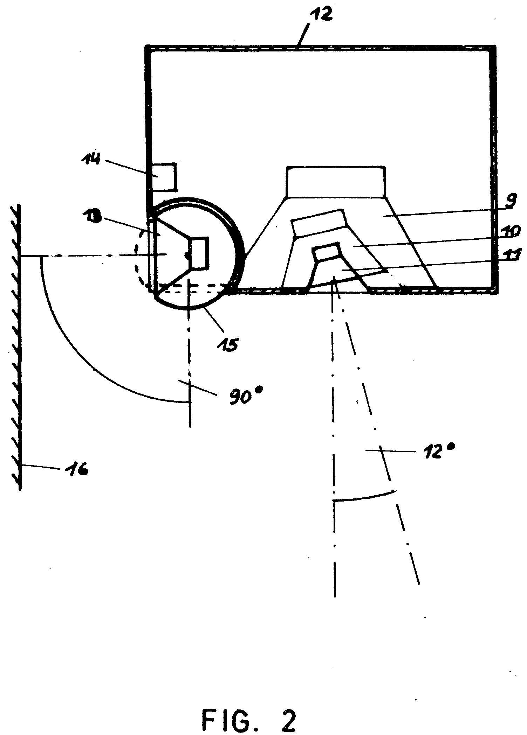

Figur 2 zeigt eine Lautsprecheranordnung in einer Stereolautsprecherbox 12. Der Tieftöner 9 ist wie üblich eingebaut. Der feste Einbau des Mitteltöners 10 und des starren Hochtöners 11 erfolgt nach vorn weisend derart, daß der Winkel etwa 12° zur idealen Hörstelle 6 beträgt. In der Stereolautsprecherbox 12 ist ein zweiter Hochtöner 13 drehbar gelagert mit variabler Schallabstrahlrichtung angeordnet. Dieser Hochtöner 13 befindet sich vorzugsweise in der linken und vorderen Seite der Stereolautsprecherbox 12, ist in der senkrechten Achse drehbar angeordnet und wird mit einem Elektromotor 14 seitlich bewegt. Die Schallabstrahlrichtung kann damit im Winkel von etwa 90° geändert werden. Der zweite Hochtöner 13 erhält vorzugsweise ein eigenes Gehäuse 15. Es sind auch mehrere Lautsprecher in dieses Gehäuse einsetzbar. Die Schallabstrahlrichtung des zweiten Hochtöners 13 erfolgt an reflektierende Raumwände 16. Die Betreibung des zweiten Hochtöners 13 erfolgt vorzugsweise über ein Radioempfangs-, Kassetten-, Plattenspieler-, Fernsehteil, das mit Fernbedienung ausgerüstet ist. Damit wird auch der zweite Hochtöner 13 für Lautstärke, Klang und Drehung über Fernbedienung regelbar. Die andere Stereolautsprecherbox ist spiegelbildlich. Die Ausrüstung und Bedienung erfolgt analog zur linken Stereolautsprecherbox 12. Erforderlich sind zwei Stereolautsprecherboxen. Bei den fest eingebauten Mittel- und Hochtönern 10 und 11 wird durch die gegenüberliegende nicht dargestellte Raumwand weniger Schallenergie zu der Lautsprecheranordnung reflektiert, die Beeinflussungen Direktschall zum reflektiertem Schall werden verringert. Die den starren Lautsprechern zugewandte Raumwand reflektiert den Schall verstärkt in Richtung idealer Hörstelle.

Es tritt eine Verbesserung des Hörempfindens und eine Verbesserung des Stereoeffektes ein. Durch den zweiten Hochtöner 13 wird das räumliche und stereofone Hören bei richtiger Einstellung deutlich verbessert. Die Einstellung der Lautsprecher erfolgt problemlos über Fernbedienung durch den Hörer. Das außerordentlich gute Klangbild ist für den Hörer schnell auffindbar.

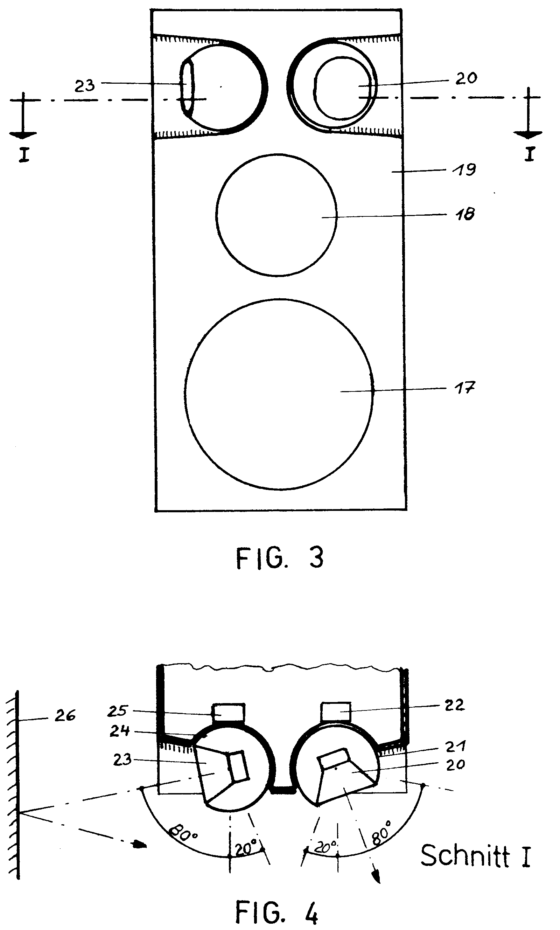

Figur 3 und Figur 4 zeigen eine Stereolautsprecherbox, die gleichermaßen rechts wie auch links zur idealen Hörstelle aufstellbar ist. Die Tief- und Mitteltöner 17 und 18 sind starr in der Stereolautsprecherbox eingebaut. Der rechte Hochtöner 20 mit variabler Schallabstrahlrichtung besitzt ein eigenes Gehäuse 21 und ist um seine senkrechte Achse nach rechts um etwa 80° drehbar. Durch einen Elektromotor 22 erfolgt die Drehung. Die Stereolautsprecherbox 19 besitzt weiterhin einen linken Hochtöner 23 mit variabler Schallabstrahlrichtung und einem eigenen Gehäuse 24. Er ist um seine senkrechte Achse nach links um etwa 80° drehbar. Die Drehung erfolgt durch einen Elektromotor 25. Die Schallabstrahlrichtung von Hochtöner 23 erfolgt hierbei an eine reflektierende linke Seitenwand 26. In die Gehäuse 21 und 24 sind auch weitere Lautsprecher mit identischer Schallabstrahlrichtung anordbar. Die Betreibung der Lautsprecher erfolgt vorzugsweise über ein Radioempfangs-, Kassetten-, Plattenspieler-, Fernsehteil, das mit Fernbedienung ausgerüstet ist. Somit werden auch die Lautsprecher für Lautstärke, Klang, verzögerte Schallabstrahlung und Drehung über Fernbedienung geregelt. Es sind nur zwei Stereolautsprecherboxen in gleicher Ausführung in Anwendung.

Bei dem Hochtöner 20 wird bei richtiger Einstellung weniger Schallenergie durch die gegenüberliegende Raumwand zur Lautsprecheranordnung reflektiert, die Beeinflussungen Direktschall zum reflektiertem Schall werden verringert. Durch den linken Hochtöner 23 wird das räumliche und stereofone Hören bei richtiger Einstellung deutlich verbessert. Die Einstellung der Lautsprecher erfolgt problemlos über Fernbedienung durch den Hörer. Auch hierbei ist das außerordentlich gute Klangbild vom Hörer schnell auffindbar.

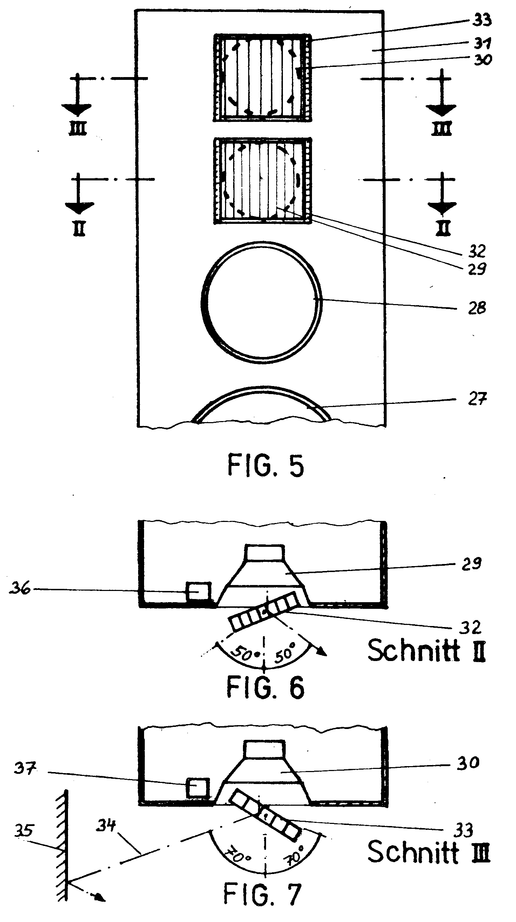

Die Figuren 5, 6 und 7 zeigen die Lautsprecheranordnung mittels je einer Stereolautsprecherbox, die gleichermaßen rechts wie auch links zur idealen Hörstelle aufstellbar ist. Die Lautsprecher 27, 28, 29, 30 sind starr nach vorn weisend in die Stereolautsprecherbox 31 eingebaut. Vor den Hochtönern 29 und 30 sind in der senkrechten Achse drehbare Rahmen 32 und 33 angeordnet, die senkrechte Lamellen starr im rechten Winkel aufweisen. Die Lamellen richten die Schallenergie. Die Schallabstrahlrichtung bei dem Hochtöner 29 ist mit Hilfe der Lamellen nach rechts und links um jeweils bis zu 50° veränderbar. Die Schallabstrahlrichtung bei dem Hochtöner 30 ist mit Hilfe der Lamellen nach rechts und links um jeweils bis zu 70° veränderbar. Die Schallenergierichtung des zweiten Hochtöners 30 wird an eine reflektierende Seitenwand 35 abgegeben. Die drehbaren Rahmen 32 und 33 mit den Lamellen sind durch Elektromotore 36 und 37 bewegbar. Die Betreibung von Lautsprechern und Lamellen erfolgt vorzugsweise über ein Radioempfangs-, Kassetten-, Plattenspieler-, Fernsehteil, das mit Fernbedienung ausgerüstet ist.

Somit werden auch die Lautsprecher für Lautstärke, Klang, verzögerte Schallabstrahlung und die Lamellen für die Drehung über Fernbedienung geregelt. Die Ausführung der Lautsprecheranordnung erfolgt analog den vorgenannten Ausführungsbeispielen.

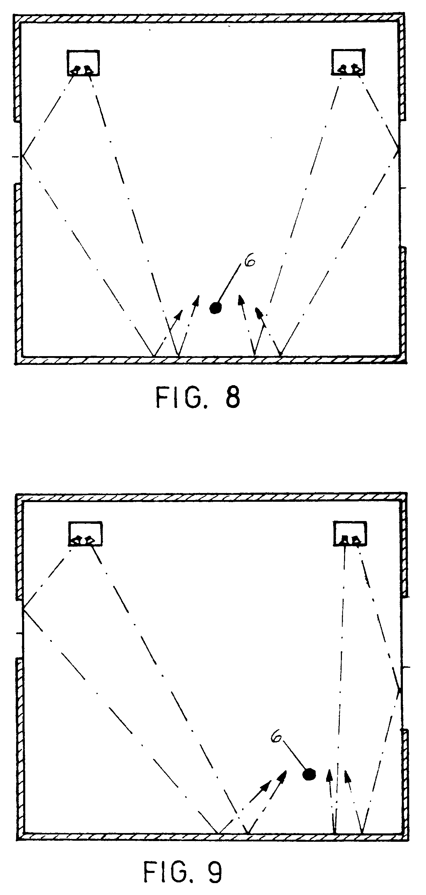

Die Figuren 8 und 9 zeigen die praktische Anwendung der Schallabstrahlrichtung des direkten und des reflektierten Schalles im geschlossenen Raum. Hierbei wird das Prinzip dargelegt, daß bei der linken Lautsprecheranlage/-box die Achse Schallabstrahlrichtung des direkten Schalles und des einmal reflektierten Schalles stets links und möglichst nahe zur idealen Hörstelle 6 verläuft, bei der rechten Lautsprecheranlage/-box die Schallabstrahlrichtung des direkten Schalles und des einmal reflektierten Schalles stets rechts und möglichst nahe zur idealen Hörstelle verläuft. Das wird beispielsweise mit um ihre senkrechte Achse gedrehten Lautsprechern erreicht.

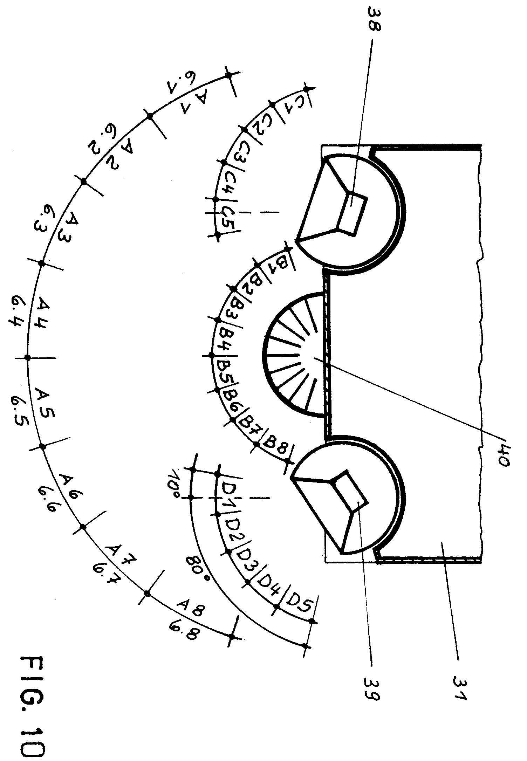

Die Stereolautsprecherbox 31 nach Figur 10 besteht aus mehreren Hochtönern 38, 39 und Mitteltönern sowie einem Tieftöner. Je eine Stereolautsprecherbox 31 ist rechts und links zur Hörstelle 6 aufstellbar. Die Hochtöner 38, 39 sind jeweils nach rechts bzw. links seitlich steuerbar drehbar. Die Drehbarkeit ist vorzugsweise bis zu einem Winkel von 80° einstellbar. In der rechten und linken Stereolautsprecherboxenfront 31 befinden sich Sensoren 40, vorzugsweise in acht Bereichen zum Empfang von Infrarotsignalen unterteilt.

Die Sensoren 40 korrespondieren mit einer gegenüberliegenden örtlich im Wohnraum bewegbaren Hörstelle 6 mit Bedienungseinheit.

Daraus ergeben sich folgende Funktionsabläufe:

```
Signal aus dem      Sensor-   Hochtöner 38   Hochtöner 39
Hörbereich          bereich   dreht in       dreht in


A 1 / 6.1     -     B 1    -  C 2      /   D 5   )
A 2 / 6.2     -     B 2    -  C 3      /   D 4   ) rechte
A 3 / 6.3     -     B 3    -  C 4      /   D 3   ) Stereo-
A 4 / 6.4     -     B 4    -  C 5      /   D 2   ) lautspre-
                                               ) cherbox


A 5 / 6.5     -     B 5    -  C 4      /   D 1   )
A 6 / 6.6     -     B 6    -  C 3      /   D 2   ) linke
A 7 / 6.7     -     B 7    -  C 2      /   D 3   ) Stereo-
A 8 / 6.8     -     B 8    -  C 1      /   D 4   ) lautspre-
                                               ) cherbox
                                               )
```

Wenn die Stereolautsprecherboxenfront 31 rechts im Wohnraum steht und über den Sensorbereich B 3 ein Infrarotsignal aus dem Hörbereich A 3 empfängt, dann wird der Hochtöner 38 in den Bereich C 4 gedreht. Die Schallabstrahlrichtung des Hochtöners 38 erfolgt damit hauptsächlich rechts und sehr nahe zur Infrarotbedienungseinheit bzw. zur Hörstelle 6. Der Hochtöner 39 wird gleichzeitig in den Bereich D gedreht. Seine Schallabstrahlrichtung erfolgt an eine Seitenwand 26. Der reflektierte Schall verläuft hauptsächlich rechts und sehr nahe zur Infrarotbedienungseinheit bzw. zur Hörstelle 6.

Steht die Stereolautsprecherbox 31 links im Wohnraum und empfängt über den Sensorbereich B 8 ein Infrarotsignal aus dem Hörbereich A 8, so wird der Hochtöner 38 in den Bereich C 1 und der Hochtöner 39 in den Bereich D 4 gedreht. Bestehen besondere Raumgeometrien oder es sind mehrere Hörer als Gruppe vorhanden, so sind auch analoge Funktionsabläufe als Programm möglich. Die Infrarotbedienungseinheit ist so gestaltet, daß das Infrarotsignal die rechte und die linke Stereolautsprecherbox 31 gleichzeitig erreicht. Weiterhin ist die Bedienungseinheit als Fernbedienungseinheit ausgestaltet. Neben dieser Infrarotfernbedienung sind auch andere bekannte Lösungen einsetzbar.

Weiterhin ist die Direktbeeinflussung Hörstelle 6 bzw. Bedienungseinheit zu Hochtönern 38, 39 einsetzbar, wie die Anwendung elektrischer Magnetfelder oder funkelektrischer Felder. Über elektrische Felder werden die Hochtöner, 38, 39 und die Hörstelle 6 mit Bedienungseinheit aufeinander ausgerichtet. Neben drehbaren Hochtönern 38, 39 lassen sich auch drehbare auf gleichem Weg steuerbare Mitteltöner in der beschriebenen Art anordnen. Ebenfalls sind die drehbaren Rahmen 32, 33 mit senkrechten Lamellen in dieser Art steuerbar.

Durch diese Anordnung wird erreicht, daß mit einem von der Hörstelle 6 ausgehendem Signal alle 4 Hochtöner, je 2 in einer Stereolautsprecherbox 31 für Direktschall und reflektiertem Schall gleichzeitig ausgerichtet werden und den Hörer an der Bedienungseinheit räumlich zwangslos ein optimaler Stereo- und Raumklang bei minimalem Arbeits- und Materialaufwand erreicht.

Durch Einhaltung dieses Prinzips wird das optimale Klangbild erhalten.

4

EP 0 568 716 A1

**Aufstellung der verwendeten Bezugszeichen**

| 1 | Fernsehgerät mit Stereoteilen |
|---|---|
| 2 | Gehäuse |
| 3 | Lautsprecher für Tiefton |
| 4 | Lautsprecher für Mittelton |
| 5 | Lautsprecher für Hochton |
| 6 | Hörstelle (6.1 - 6.8) |
| 7 | reflektierter Schall |
| 8 | Raumwand |
| 9 | Tieftöner |
| 10 | Mitteltöner |
| 11 | starrer Hochtöner |
| 12 | Stereolautsprecherbox |
| 13 | zweiter Hochtöner |
| 14 | Elektromotor |
| 15 | Gehäuse |
| 16 | Raumwand |
| 17 | Tieftöner |
| 18 | Mitteltöner |
| 19 | Stereolautsprecherbox |
| 20 | Hochtöner |
| 21 | Gehäuse |
| 22 | Elektromotor |
| 23 | Hochtöner |
| 24 | Gehäuse |
| 25 | Elektromotor |
| 26 | Seitenwand |
| 27 | Tieftöner |
| 28 | Mitteltöner |
| 29 | erster Hochtöner |
| 30 | zweiter Hochtöner |
| 31 | Stereolautsprecherboxen |
| 32 | drehbarer Rahmen |
| 33 | drehbarer Rahmen |
| 34 | Schallenergierichtung |
| 35 | Seitenwand |
| 36 | Elektromotor |
| 37 | Elektromotor |
| 38 | Hochtöner |
| 39 | Hochtöner |
| 40 | Sensoren |
| A | 1- A 8 Hörbereich |
| B | 1- B 8 Hörbereich |
| C | 1- C 5 Hörbereich |
| D | 1- D 5 Hörbereich |

**Patentansprüche**

1. Lautsprecheranordnung zur Wiedergabe, insbesondere wenigstens zweikanalig übertragbarer Schallereignisse, vorzugsweise in Wohnräumen mittels Lautsprecherkombinationen, wobei die Lautsprecher in verschiedener Richtung angeordnet und steuerbar schwenkbar sind, **dadurch gekennzeichnet,** daß je eine Stereolautsprecherbox (31), bestehend aus mehreren Hochtönern (38, 39) und Mitteltönern sowie Tieftönern, rechts und links gegenüber der Hörstelle (6) angeordnet ist, die Hochtöner (38, 39) und Mitteltöner sind seitlich über eine bekannte Bedienungseinheit und bekannte Sensoren (40) steuerbar drehbar und in der Stereolautsprecherboxenfront (31) sind die Sensoren (40), die mit der örtlich variablen im Wohnraum befindlichen Hörstelle (6) gekoppelt, die mit der Bedienungseinheit korrespondiert, angeordnet, wobei mit einem von der Hörstelle (6) ausgehendem Signal sämtliche Hochtöner (38,

5

39) in den Stereolautsprecherboxen (31) für Direktschall und reflektiertem Schall gleichzeitig ausrichtbar angeordnet sind.

2. Lautsprecheranordnung nach Anspruch 1, **dadurch gekennzeichnet,** daß Lautsprecher für Tiefton (3), für Mittelton (4) starr nach vorn weisend und Lautsprecher für Hochton (5) drehbar unter Einbeziehung der Schallreflektierung (7) der Raumwand (8) zur idealen Hörstelle (6) angeordnet sind.

3. Lautsprecheranordnung nach Anspruch 1 und 2, **dadurch gekennzeichnet,** daß der Tieftöner (9), der Mitteltöner (10) und der Hochtöner (11) starr im Winkel zur idealen Hörstelle angeordnet ist und in jeder Stereolautsprecherbox (12) sich ein zweiter Hochtöner (13) seitlich drehbar zu der reflektierenden Raumwand (16) befindet.

4. Lautsprecheranordnung nach Anspruch 1 bis 3, **dadurch gekennzeichnet,** daß vor den Hochtönern (29, 30) senkrechte Lamellen starr im rechten Winkel in drehbare, zur Seitenwand (35) und zur Hörstelle (6) weisende Rahmen (32, 33) angeordnet sind.

EP 0 568 716 A1

FIG. 1

FIG. 2

FIG. 3

Schnitt I

FIG. 4

FIG. 5

Schnitt II

FIG. 6

Schnitt III

FIG. 7

10

FIG. 8

FIG. 9

FIG. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN vol. 13, no. 350 (E-800)7. August 1989 & JP-A-11 09 898 ( MATSUSHITA ) 26. April 1989 * Zusammenfassung * --- | 1 | H04R5/02 H04R1/32 |
| Y | US-A-4 884 655 (FREADMAN ET AL.) * Spalte 1, Zeile 32 – Zeile 41 * * Spalte 2, Zeile 12 – Zeile 31 * * Spalte 3, Zeile 16 – Zeile 62 * --- | 1 | |
| D,A | DE-A-3 607 987 (LOEWE OPTA) * das ganze Dokument * --- | 1-3 | |
| A | US-A-4 624 337 (SHAVERS) * Spalte 2, Zeile 5-27 * * Spalte 3, Zeile 3-22 * --- | 4 | |
| E | DE-A-4 101 153 (LANG DIETER) * das ganze Dokument * --- | 1 | |
| E | DE-A-4 036 152 (LANG DIETER) * das ganze Dokument * ----- | 2-4 | **RECHERCHIERTE SACHGEBIETE (Int. Cl.5)** H04R |

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1992 | ZANTI P.V.L. |